# EUROPEAN PATENT SPECIFICATION

(11) **EP 0 658 030 B1**
(45) Date of publication and mention of the grant of the patent: **11.06.2003**
(21) Application number: 94309043.1
(22) Date of filing: 06.12.1994
(51) Int. Cl.: H04M 1/02

(54) **Foldable portable radiotelephone**
Trag- und klappbares Funkgerät
Radiotéléphone portable et pliable

(30) Priority: 09.12.1993 JP 30892093
(43) Date of publication of application: 14.06.1995
(73) Proprietor: NEC CORPORATION, Tokyo (JP)
(72) Inventor: Nagai, Michio, c/o NEC Corporation, Minato-ku, Tokyo (JP)
(74) Representative: Moir, Michael Christopher

(56) References cited:
- EP-A- 0 391 020
- EP-A- 0 535 903
- FR-A- 2 601 211
- US-A- 4 481 382
- US-A- 5 260 998
- PATENT ABSTRACTS OF JAPAN vol. 17, no. 328 (E-1385) 22 June 1993 & JP-A-05 037 442 (OKI ELECTRIC IND CO LTD)

## Description

### BACKGROUND OF THE INVENTION

The present invention relates to a portable transceiver and, particularly, to a folding type portable transceiver.

Because of the fact that a receiver (speaker) and a transmitter (microphone) of the portable transceiver must correspond in position to the ear and mouth of a user, respectively, the size of the portable transceiver when in use is relatively large.

In order to solve this problem, a folding type portable transceiver has been popularized generally.

The portable transceiver of this type is constituted with an upper casing and a lower casing which are hinged foldingly.

When there is a communication therethrough, the these casings are opened with respect to each other about the hinge portion and, when it is not used, they are closed to improve the portability thereof.

A construction of an example of a folding type portable transceiver of this kind is disclosed in Japanese Patent Application Laid-open Showa 63-129755, publicated on June 2, 1988.

The portable transceiver disclosed in the above article is made foldable by dividing a communication unit to two blocks contained in an upper casing and a lower casing, respectively.

Since, in the prior art portable transceiver mentioned above, however, a radio circuit board on which radio circuit parts including a power amplifier are mounted and which generate a large amount of heat is provided in the upper casing, there is a problem that heat generated thereby is conducted to the ear of a user through a receiver included in the upper casing during communication, causing discomfort to the user.

Further, the upper casing includes the radio circuit board, a display and the receiver, and the lower casing includes a battery, a key-operating portion, a control circuit board for controlling the radio circuit board, the display and the key-operating portion and a transmitter. Weights of the casings are made balanced such that a user can hold either one of the casings during communication. It brings about another problem, i.e., when the user holds the upper casing, he has to switch the casing to be held from the upper casing to the lower casing in order to operate keys of the key-operating portion included in the lower casing.

French Patent Application FR-A-2 601 211 of Mecelec SA discloses a portable telephone having an upper casing hinged to a lower casing. The upper casing has a battery compartment, while the lower compartment houses circuitry. Because of the heavy upper casing, the telephone of this reference may not be stable for a person operating the keyboard 13 fitted in the lower casing.

U.S. Patent 4,481,382, granted to A.-E. Villa-Real on 6 November 1984, discloses a programmable cordless telephone unit having a lower casing and a smaller upper casing that is foldable onto a portion of the lower casing.

### SUMMARY OF THE INVENTION

An object of the present invention is to provide a folding-type portable transceiver having a hinge portion or other form of folding coupling and in which heat generated by the radio circuit thereof is not conducted to an ear of the user through one of the casings during communication.

Another object of the present invention is to provide a folding-type portable transceiver which provides a stable feeling to a user when he takes it in his hand.

In order to achieve the above objects, one aspect of the invention provides a folding portable radio transceiver comprising: an upper casing, including a receiver for receiving radio signals and also including a display portion; and a lower casing including a transmitter for transmitting a radio signal; a hinge portion for coupling said upper casing and said lower casing. In said lower casing are arranged at least a radio circuit board, a control circuit board for controlling said radio circuit board, a battery, and, comprised in the radio circuitboard, a radio circuit part generating a substantial amount of heat during transmission, unfolding of the upper casing and lower casing during use of the transceiver preventing the substantial amount of heat generated by the radio circuit part from reaching the upper casing, the weight of the lower casing and its contents being substantially greater than the weight of the upper casing and its contents.

The radio circuit part may include a power amplifier. The transceiver may be a cellular telephone.

The receiver is a speaker, and the transmitter is a microphone. As used herein the term "speaker" includes any suitable transducer for producing an audio output from an electrical signal, and "microphone" means any suitable transducer for converting an audio input into an electrical signal.

With the above-mentioned construction, in which the power amplifier, etc., which generates a large amount of heat is not provided in the casing including the receiver, the problem of an uncomfortable feeling to the user's ear due to heat generated by such power amplifier and conductor can be solved.

Since the radio circuit board and a display are provided in the lower casing, and therefore the weight of the lower casing is larger than that of the upper casing, the user necessarily holds the heavier lower casing and there is no need for switching his hand to hold the lower casing when he operates the keys.

### BRIEF DESCRIPTION OF THE DRAWINGS

These and other objects, features and advantages of the present invention will become more apparent from the following detailed description taken in conjunction with the accompanying drawings, in which:
Fig. 1 shows a side view and a front view of a folding type portable transceiver having a hinge portion, according to a first embodiment of the present invention:
Fig. 2 shows a side view and a front view of a modification of the folding type portable transceiver according to the first embodiment of the present invention;
Fig. 3 shows a side view and a front view of a folding type portable transceiver having a hinge portion, according to a second embodiment of the present invention; and
Fig. 4 shows a side view and a front view of a modification of the folding type portable transceiver according to the second embodiment of the present invention.

### DETAILED DESCRIPTION OF THE PREFERRED EMBODIMENTS

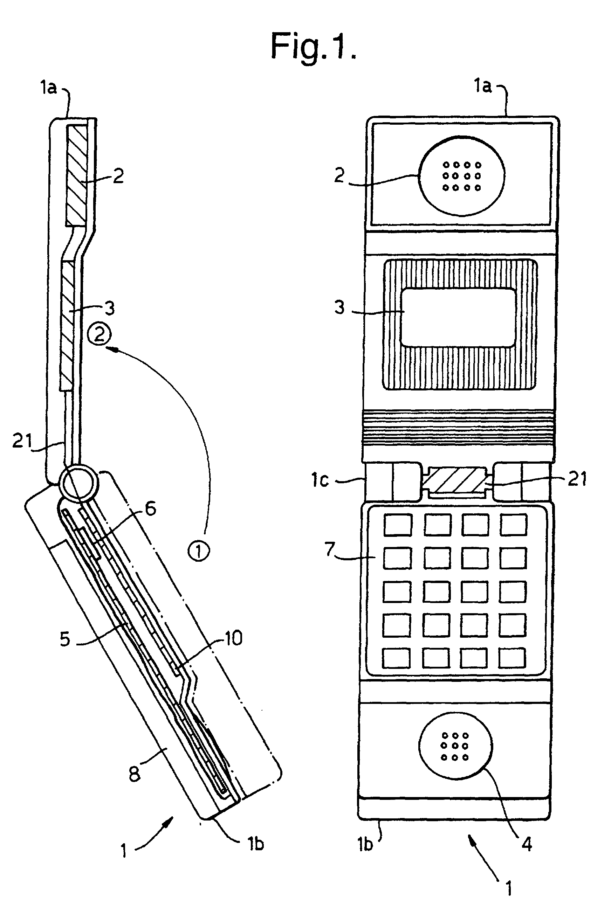

In Fig. 1, a portable transceiver 1 is of folding type composed of an upper casing la and a lower casing 1b. The upper casing la includes a receiver (speaker) 2 for emitting an audio signal from the other person and a display 3 for displaying time and various information. The lower casing 1b has a key operating portion 7 including various key buttons and a transmitter (microphone) 4 for transmitting audio information to the other person. The upper and lower casings la and 1b are hinged by a hinge portion lc so that these casings can be opened with respect to each other. In the lower casing 1b, a radio circuit board 5 including a transmitting portion and a receiving portion, a control circuit board 10 on which a CPU, etc., having control function is mounted, a battery for driving the portable transceiver and a battery box 8 are further provided. On the transmitting portion on the radio circuit board 5, a power amplifier for transmitting a transmission signal to a transceiver of the other person is mounted as a radio circuit part 6 which generates a large amount of heat. The receiver 2 and the display 3 arranged in the upper casing la and the control circuit board 10 arranged in the lower casing 1b are electrically connected to each other by a flexible sheet 21. The control circuit board 10, the radio circuit board 5 and the key operating portion 7 arranged in the lower casing 1b are electrically connected to the radio circuit board 5 through a connector (not shown) and to the transmitter 4 through a cable (not shown).

With the construction mentioned above, it is possible to solve the problem of uncomfortable feeling due to heat generated by the power amplifier which is the radio circuit part 6 and conducted to user' ear through the receiver 2, while maintaining the improved portability of the prior art folding type portable transceiver caused by employment of the openable upper and lower casings (in Fig. 1, the upper casing la is opened in a direction shown by an arrow extending from a position (1) to (2) when the transceiver is used).

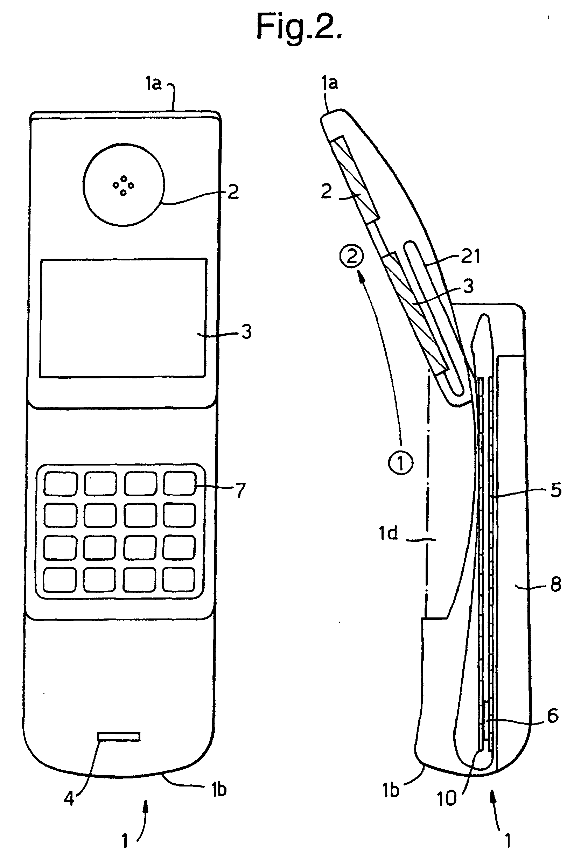

In a transceiver shown in Fig. 2 which is a modification of the transceiver shown in Fig. 1, an upper casing la can be received slidably in a curved receiving portion id of a lower casing 1b. Similarly to the embodiment shown in Fig. 1, a radio circuit part 6 including a power amplifier which generates a large amount of heat, a key operating portion 7, a transmitter 4, a radio circuit board 5, a control circuit board 10, a battery and a battery box 8 of the portable transceiver shown in Fig. 2 are arranged in the lower casing 1b.

In the construction of the portable transceiver shown in Fig. 2, communication becomes possible by sliding the upper casing la in the direction from a position (1) to a position (2) to open the transceiver as shown by an arrow.

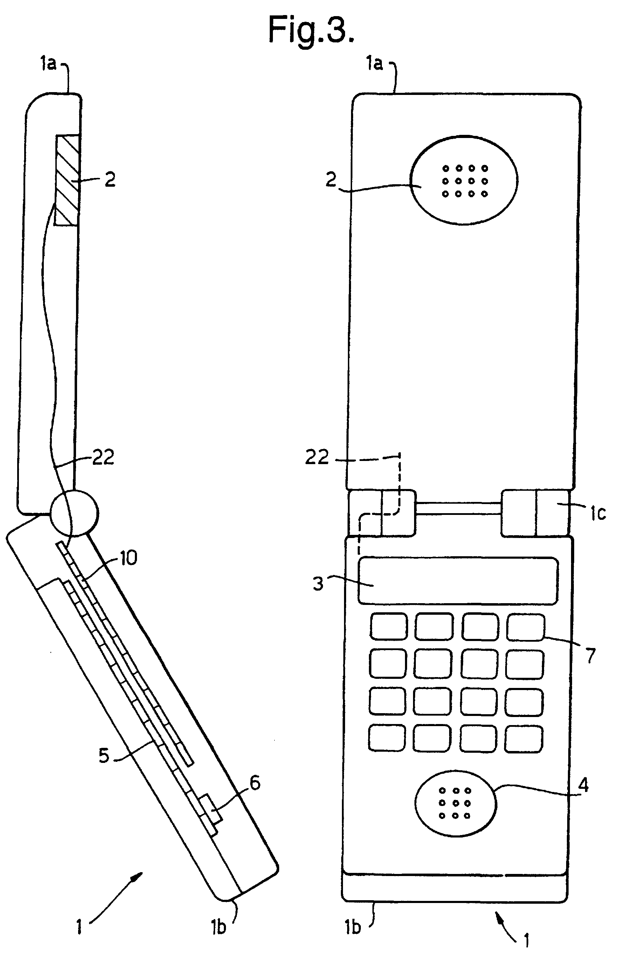

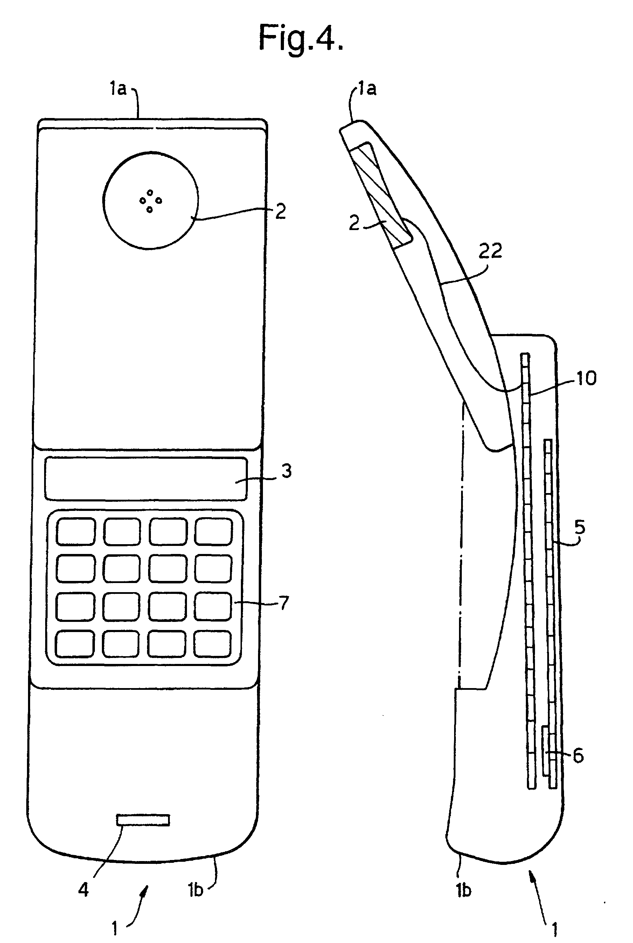

In a second embodiment of the present invention shown in Fig. 3 and a modification thereof shown in Fig. 4, a display 3 is provided in a lower casing 1b contrarily to the first embodiment shown in Fig. 1 or the modification thereof shown in Fig. 2. In the second embodiment or the modification thereof, a receiver 2 can be electrically connected to a control circuit board 10 of the lower casing through a cable 2 and there is no need of providing a flexible sheet in a hinge portion 1c. The control circuit boad 10 of the lower casing 1b is electrically connected to the display portion 3 thereof through a flexible sheet (not shown), the control circuit board 10, a radio circuit board 5 and a key operating portion 7 are electrically connected each other through a connector (not shown) and the radio circuit board 10 is electrically connected to a transmitter 4 through a cable 22.

Therefore, due to the facts that the key operating portion 7, the transmitter 4, the radio circuit board 5, the control circuit boad 10, the display portion 3, a battery and a battery box 8 are arranged in the lower casing and therefore that weight of the transceiver is concentrated in the lower casing, it becomes always possible to hold the transceiver at the lower casing stably due to weight balance. Therefore, it is unnecessary to switch the holding position of the transceiver from the upper casing to the lower casing.

Obviously, numerous additional modifications and variations of the present invention are possible in light of the above teachings. It is, therefore, to be understood that within the scope of the appended claims, the present invention may be practised otherwise than as specifically described herein.

## Claims

1. A folding-type portable transceiver comprising:
an upper casing (1a), including a receiver (2) for receiving radio signals and also including a display portion;
a lower casing (1b) including a transmitter (4) for transmitting a radio signal;
a hinge portion (1c) for coupling said upper casing (1a) and said lower casing (1b) ;
**characterised in that**, in said lower casing, are arranged at least a radio circuit board (5), a control circuit board (10) for controlling said radio circuit board (5), a battery (8), and, comprised in radio circuit board (5), a radio circuit part (6) generating a substantial amount of heat during transmission, unfolding of the upper casing (1a) and lower casing (1b) during use of the transceiver preventing the substantial amount of heat generated by the radio circuit part (6) from reaching the upper casing (1a), the weight of the lower casing and its contents being substantially greater than the weight of the upper casing and its contents.

2. The folding-type portable transceiver claimed in claim 1, further **characterised in that** said radio circuit part (6) includes a power amplifier.

3. The folding-type portable transceiver claimed in claim 1 or 2, wherein the transceiver is a cellular telephone.

## Patentansprüche

1. Tragbares Sende-Empfangs-Gerät vom klappbaren Typ, das aufweist:
ein oberes Gehäuse (1a) das einen Empfänger (2) zum Empfangen von Funksignalen enthält und auch einen Anzeigeteil enthält;
ein unteres Gehäuse (1b), das einen Sender (4) zum Senden eines Funksignals enthält;
einen Scharnierteil (1c) zum Verbinden des oberen Gehäuses (1a) und des unteren Gehäuses (1b);
**dadurch gekennzeichnet, daß** in dem unteren Gehäuse wenigstens eine Funkschaltungsplatine (5), eine Steuerschaltungsplatine (10) zum Steuern der Funkschaltungsplatine (5), eine Batterie (8) und, in der Funkschaltungsplatine (5) enthalten, ein Funkschaltungsteil (6) angeordnet ist, der während des Sendens eine beträchtliche Menge von Wärme erzeugt, wobei ein Auseinanderklappen des oberen Gehäuses (1a) und des unteren Gehäuses (1b) während der Benutzung des Sende-Empfangs-Gerätes verhindert, daß die beträchtliche Wärmemenge, die durch den Funkschaltungsteil (6) erzeugt wird, das obere Gehäuse (1a) erreicht,
wobei das Gewicht des unteren Gehäuses und seines Inhalts wesentlich größer ist als das Gewicht des oberen Gehäuses und seines Inhalts.

2. Tragbares Sende-Empfangs-Gerät vom klappbaren Typ nach Anspruch 1, weiter **gekennzeichnet dadurch, daß** der Funkschaltungsteil (6) einen Leistungsverstärker einschließt.

3. Tragbares Sende-Empfangs-Gerät vom klappbaren Typ nach Anspruch 1 oder 2, bei dem das Sende-Empfangs-Gerät ein zellulares Telefon ist.

## Revendications

1. Emetteur-récepteur portable de type pliable, comprenant :
un boîtier supérieur (1a) comportant un récepteur (2) pour recevoir des signaux radio et comportant également une partie d'affichage ;
un boîtier inférieur (1b) comportant un émetteur (4) pour émettre un signal radio ;
une partie formant charnière (1c) pour relier ledit boîtier supérieur (1a) et ledit boîtier inférieur (1b) ;
**caractérisé en ce que**, dans ledit boîtier inférieur, se trouvent'au moins une carte de circuit radio (5), une carte de circuit de commande (10) pour commander ladite carte de circuit radio (5), une batterie (8) et, intégrée à la carte de circuit radio (5), une partie de circuit radio (6) dégageant une quantité notable de chaleur pendant l'émission, le dépliement du boîtier supérieur (1a) et du boîtier inférieur (1b) pendant l'utilisation de l'émetteur-récepteur empêchant la quantité notable de chaleur dégagée par la partie de circuit radio (6) d'atteindre le boîtier supérieur (1a), le poids du boîtier inférieur et de son contenu étant notablement supérieur au poids du boîtier supérieur et de son contenu.

2. Emetteur-récepteur portable de type pliable selon la revendication 1, **caractérisé en outre en ce que** ladite partie de circuit radio (6) comporte un amplificateur de puissance.

3. Emetteur-récepteur portable de type pliable selon la revendication 1 ou 2, dans lequel ledit émetteur-récepteur est un téléphone cellulaire.
